Europäisches Patentamt

European Patent Office

Office européen des brevets

(11) Numéro de publication: **0 312 444 B1**

(12) **FASCICULE DE BREVET EUROPEEN**

(45) Date de publication de fascicule du brevet: **19.11.92**  (51) Int. Cl.5: **B65H 75/18**, G02B 6/44

(21) Numéro de dépôt: **88402566.9**

(22) Date de dépôt: **11.10.88**

(54) **Bobine pour fibre optique et procédé de bobinage sans contrainte de fibre optique.**

(30) Priorité: **13.10.87 FR 8714097**

(43) Date de publication de la demande:
**19.04.89 Bulletin 89/16**

(45) Mention de la délivrance du brevet:
**19.11.92 Bulletin 92/47**

(84) Etats contractants désignés:
**DE GB IT NL SE**

(56) Documents cités:
DE-U- 8 517 450      FR-A- 2 555 560
US-A- 4 219 274      US-A- 4 657 202
US-A- 4 657 203      US-A- 4 696 438

(73) Titulaire: **THOMSON-CSF**
**51, Esplanade du Général de Gaulle**
**F-92800 Puteaux(FR)**

(72) Inventeur: **Lefevre, Hervé**
**THOMSON-CSF SCPI 19, avenue de Messine**
**F-75008 Paris(FR)**
Inventeur: **Bettini, Jean-Pierre**
**THOMSON-CSF SCPI 19, avenue de Messine**
**F-75008 Paris(FR)**
Inventeur: **Botti, Serge**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

## Description

L'invention concerne une bobine pour fibre optique et notamment un procédé de bobinage permettant de réaliser un bobinage d'une fibre optique sans imposer de contrainte à la fibre.

Le bobinage classique d'une fibre en multicouche crée des microcourbures qui peuvent augmenter les pertes ou bien produire des couplages de polarisation dans le cas de fibres à conservation de polarisation. En effet si la première couche de fibre peut être à spires jointives, la deuxième est enroulée avec un pas d'hélice inverse et il y a un chevauchement à chaque spire de la fibre sur la couche inférieure, ce qui crée des microcourbures à cause de la tension nécessaire au bobinage.

Les documents US-A-4 219 274 et FR-A-2 555 560 décrivent des bobines comportant des éléments amovibles à la périphérie du tambour d'enroulement de la fibre et permettant de réaliser un relâchement de la tension de la fibre.

L'invention fournit une autre solution plus simple permettant de palier l'inconvénient mentionné précédemment.

L'invention concerne donc une bobine pour fibre optique comprenant un cylindre sur lequel doit être enroulée une fibre optique et comportant deux flasques situées de part et d'autre du cylindre pour maintenir la fibre lors de l'enroulement et après enroulement, caractérisée en ce que le cylindre comporte une ou plusieurs découpes de forme cylindrique réalisées chacune selon une génératrice du cylindre constituant des interruptions dans la régularité de la surface extérieure du cylindre.

L'invention concerne également un procédé de bobinage pour fibre optique utilisant une bobine, caractérisé en ce qu'il comporte les étapes suivantes :

- mise en place dans les rainures de pièces amovibles et formant des saillies à la surface extérieure du cylindre de façon à augmenter la circonférence d'enroulement d'une fibre optique ;
- enroulement d'une fibre optique sur le cylindre muni des pièces amovibles ;
- retrait des pièces amovibles ce qui a pour effet de relacher la tension d'enroulement de la fibre optique et d'éliminer les contraintes dues à cette tension.

Les différents objets et caractéristiques de l'invention apparaîtront plus clairement à la description qui va suivre faite à titre d'exemple en se reportant aux figures annexées qui représentent :

- la figure 1, un exemple de réalisation de la bobine selon l'invention ;
- la figure 2, une vue de coté d'une variante de réalisation d'une bobine selon l'invention ;
- la figure 3, une vue en perspective d'une bobine selon l'invention ;
- la figure 4, une vue en coupe de la bobine de la figure 2.

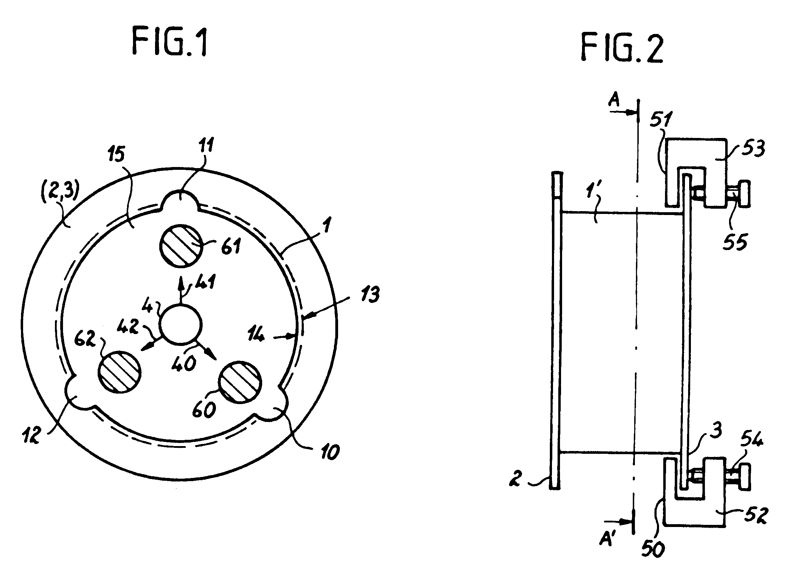

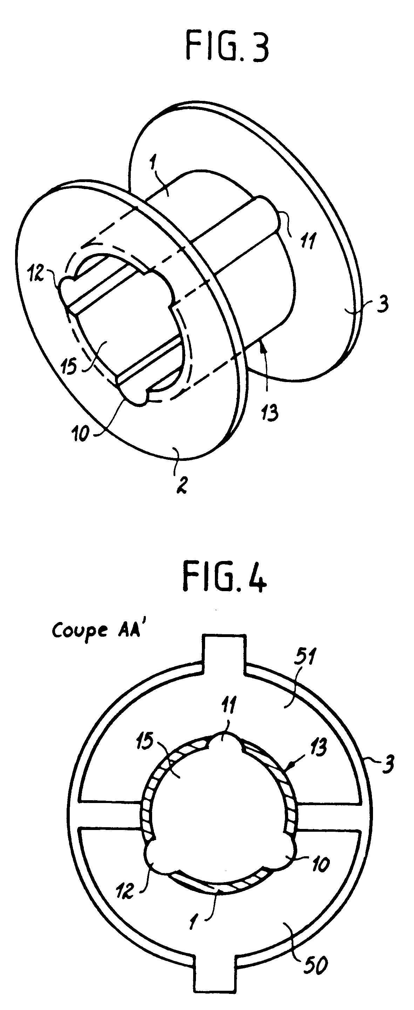

En se reportant aux figures 1 et 3 on va tout d'abord décrire un exemple de réalisation d'une bobine selon l'invention. Cette bobine comporte un cylindre 1 possédant une surface extérieure 13 qui servira de support à l'enroulement d'une fibre optique. L'intérieur du cylindre est creux et détermine une cavité 15.

Les extrémités du cylindre comportent des flasques 2 et 3 qui permettront de déterminer la longueur du cylindre selon laquelle sera réalisé l'enroulement de la fibre.

Selon l'invention le cylindre comporte des rainures 10, 11, 12 réalisées selon des génératrices du cylindre. Selon les figures 1 et 3, ces rainures sont des découpes parallèles à l'axe du cylindre et réalisées dans la paroi du cylindre. Les flasques 2 et 3 sont également découpées selon la même forme que les découpes.

Sur les figures 1 et 3, le nombre de rainures (ou découpes) est de trois mais il est possible sans sortir du cadre de l'invention d'en prévoir un nombre différent.

En liaison avec la bobine ainsi décrite, l'invention concerne également un procédé de bobinage.

Selon ce procédé de bobinage on place tout d'abord, dans les rainures 10 à 12, des pièces amovibles 60, 61, 62 ayant la forme de tiges et formant des saillies à la surface extérieure 13 du cylindre 1. A titre d'exemple, sur la figure 1, ces pièces 60 à 62 sont de forme cylindrique. Les découpes 10, 11, 12 sont également de forme cylindrique.

La mise en place des pièces 60 à 62 se fait par l'intérieur du cylindre 1. Un dispositif à mandrin, comportant des tiges rétractables 40, 41, 42 pousse les pièces amovibles 60 à 62 vers la face intérieure 14 du cylindre 1, les place dans les rainures 10 à 12 et les maintient en position de façon à ce qu'elles fassent saillie à l'extérieur du cylindre.

Une fibre optique est ensuite bobinée sur le cylindre 1, les pièces 60 à 62 augmentant alors la périphérie d'enroulement de la fibre.

Enfin, le mandrin 4 commande, à l'aide des tiges rétractables 40, 41, 42, le retrait des pièces amovibles 60, 61, 62. La fibre bobinée précédemment se retrouve alors directement sur la surface extérieure 13 du cylindre 1. La tension appliquée inévitablement à la fibre lors de la phase de bobinage disparaît alors.

On prévoit dans l'exemple de la figure 1, trois pièces amovibles 60, 61, 62 avec les tiges rétractables correspondantes 40, 41, 42, mais il est bien évident qu'un nombre différent de ces éléments pourrait être choisi.

En se reportant aux figures 2 et 4, on va décrire un exemple de variante du dispositif et du procédé de l'invention permettant de supprimer les contraintes créées dans la fibre lors de l'étape de bobinage.

Selon les figures 2 et 4 on prévoit une ou plusieurs flasques amovibles (2 flasques sur l'exemple de réalisation représenté) placées contre la face intérieure d'une des deux flasques 2 ou 3.

Sur la figure 2 on voit deux flasques 50 et 51 placées contre la face intérieure de la flasque 3. Ces flasques sont maintenues en position par des pièces 52, 53 chevauchant la flasque 3 et des moyens de fixation, tels que des vis 54, 55, maintiennent en position les flasques amovibles 50, 51.

Selon le procédé de l'invention, avant bobinage d'une fibre, on place les flasques amovibles 50 et 51 sur la bobine et on l'immobilise à l'aide des vis 54 et 55 contre la flasque 3. On réalise ensuite le bobinage de la fibre puis on enlève les flasques amovibles 50 et 51. La fibre bobinée est alors moins comprimée et les contraintes dues à l'opération de bobinage sont éliminées en totalité ou en partie.

L'invention permet ainsi d'utiliser un support-bobine ordinaire dans lequel ont été fraisés des dégagements (3 par exemple). On place des tiges montées sur un mandrin rétractable dans ces dégagements si bien que les spires sont bobinées avec un périmètre supérieur à celui du support-bobine. Après bobinage ces tiges sont retirées, ce qui relache la tension et donc les microcourbures parasites.

Cette technique est de plus améliorée en plaçant des joues amovibles dans la hauteur du support bobine (Figure 2). En retirant ces joues, on écarte les spires d'une même couche ce qui libère la couche supérieure qui peut se loger dans les interstices de la couche précédente.

On obtient finalement une bobine où la tension de la fibre a été relachée complètement, supprimant donc les microcourbures génératrices de pertes et de couplages de polarisation. A titre d'exemple on a réalisé une bobine de 250 mètres de fibre logée dans un support de diamètre intérieur 25 mm, de diamètre extérieur 36 mm et de hauteur 14 mm.

Il est bien évident que la description qui précède n'a été faite qu'à titre d'exemple non limitatif. D'autres variantes peuvent être envisagées sans sortir du cadre de l'invention. Notamment les exemples numériques et les produits employés dans la réalisation du matériau selon l'invention n'ont été fournis que pour illustrer la description.

**Revendications**

1. Bobine pour fibre optique comprenant un cylindre (1) sur lequel doit être enroulée une fibre optique et comportant deux flasques (2,3) situées de part et d'autre du cylindre pour maintenir la fibre lors de l'enroulement et après enroulement, caractérisée en ce que le cylindre (1) comporte une ou plusieurs rainures de forme semi-cylindrique dont l'axe est parallèle à une génératrice du cylindre (1) réalisées chacune selon une génératrice du cylindre et constituant des interruptions dans la régularité de la surface extérieure du cylindre (1).

2. Bobine pour fibre optique selon la revendication 1, caractérisée en ce que les flasques (2, 3) sont également découpées selon la même forme que les rainures.

3. Procédé de bobinage pour fibre optique utilisant une bobine selon la revendication 1, caractérisé en ce qu'il comporte les étapes suivantes :
   - mise en place dans les rainures (10,11,12) de pièces amovibles (60,61,62) de forme cylindrique et formant des saillies à la surface extérieure (13) du cylindre de façon à augmenter la circonférence d'enroulement d'une fibre optique ;
   - enroulement d'une fibre optique sur le cylindre (1) muni des pièces amovibles (60,61,62) ;
   - retrait des pièces amovibles (60,61,62) ce qui a pour effet de relâcher la tension d'enroulement de la fibre optique et d'éliminer les contraintes dues à cette tension.

4. Procédé de bobinage selon la revendication 3, caractérisé en ce que la mise en place des pièces amovibles (60,61,62) dans les rainures se fait par le centre (15) de la bobine.

5. Procédé de bobinage selon la revendication 3, caractérisé en ce que la mise en place des pièces amovibles (60,61,62) dans les rainures et leur retrait se lait à l'aide d'un mandrin (4) possédant pour chaque pièce amovible une broche (40,41,42) rétractable.

6. Procédé de bobinage selon la revendication 3, caractérisé en ce que :
   - l'étape d'enroulement d'une fibre optique est précédée de la mise en place d'au moins une flasque amovible (50,51) contre le flanc intérieur d'une des flasques (2,3) de la bobine et de sa fixation à ladite flasque ;
   - l'étape d'enroulement de la fibre optique est suivie du retrait de la flasque amovible (50,51).

**Claims**

1.  Reel for optical fibre comprising a cylinder (1) over which an optical fibre is to be wound and including two flanges (2,3) located on either side of the cylinder in order to retain the fibre during winding and after winding, characterised in that the cylinder (1) includes one or more grooves of semi-cylindrical shape, the axis of which is parallel to a generatrix of the cylinder (1), each of which grooves is produced along a generatrix of the cylinder and constituting interruptions in the uniformity of the outer surface of the cylinder (1).

2.  Reel for optical fibre according to Claim 1, characterised in that the flanges (2,3) are also cut out in the same shape as the grooves.

3.  Reeling method for optical fibre using a reel according to Claim 1, characterised in that it includes the following steps:
    - installing removable parts (60,61,62) of cylindrical shape and forming projections at the outer surface (13) of the cylinder so as to increase the winding circumference of an optical fibre in the grooves (10,11,12);
    - winding an optical fibre onto the cylinder (1) fitted with removable parts (60,61,62);
    - withdrawing the removable parts (60,61,62), which has the effect of releasing the winding tension of the optical fibre and of removing the stresses due to this tension.

4.  Reeling method according to Claim 3, characterised in that the installation of the removable parts (60,61,62) in the grooves is performed via the centre (15) of the reel.

5.  Reeling method according to Claim 3, characterised in that the installation of the removable parts (60,61,62) in the grooves and their withdrawal is performed with the aid of a mandrel (4) possessing a retractable spindle (40,41,42) for each removable part.

6.  Reeling method according to Claim 3, characterised in that:
    - the winding step of an optical fibre is preceded by the installation of at least one removable flange (50,51) against the inner flank of one of the flanges (2,3) of the reel and its fixing to the said flange;

    - the winding step of the optical fibre is followed by the withdrawal of the removable flange (50,51).

**Patentansprüche**

1.  Spulenkörper für Lichtleitfasern mit einem Zylinder, auf dem eine Lichtleitfaser aufgewickelt werden soll, mit zwei Flanschen (2, 3) zu beiden Seiten des Zylinders zum Halten der Faser während und nach dem Aufwickeln, dadurch gekennzeichnet, daß der Zylinder (1) eine oder mehrere Rillen halbzylindrischer Form aufweist, deren Achse parallel zu einer Mantellinie des Zylinders (1) verläuft, wobei jede Rille sich entlang einer Mantellinie des Zylinders erstreckt und Unterbrechungen der Regelmäßigkeit der Außenoberfläche des Zylinders (1) bildet.

2.  Spulenkörper für Lichtleitfasern gemäß Anspruch 1, dadurch gekennzeichnet, daß die Flansche (2, 3) ebenfalls in der gleichen Form ausgeschnitten sind, wie die Rillen.

3.  Wickelverfahren für Lichtleitfasern unter Verwendung einer Spulenkörpers, dadurch gekennzeichnet, daß es folgende Verfahrensschritte aufweist:
    - Anbringen von entfernbaren Teilen (60, 61, 62) zylindrischer Form in den Rillen (10, 11, 12), die Vorsprünge an der Außenoberfläche (13) des Zylinders bilden, derart, daß der Wicklungsumfang einer Lichtleitfaser vergrößert wird;
    - Aufwickeln einer Lichtleitfaser auf den mit den entfernbaren Teilen (60, 61, 62) versehenen Zylinder (1);
    - Entfernen der entfernbaren Teile (60, 61, 62), mit der Wirkung, daß der Wickelzug der Lichtleitfaser entlastet und die Beanspruchungen durch diesen Zug beseitigt werden.

4.  Wickelverfahren nach Anspruch 3, dadurch gekennzeichnet, daß das Anbringen der entfernbaren Teile (60, 61, 62) in den Rillen vom Zentrum (15) des Spulenkörpers her erfolgt.

5.  Wickelverfahren nach Anspruch 3, dadurch gekennzeichnet, daß das Anbringen der entfernbaren Teile (60, 61, 62) in den Rillen sowie ihr Entfernen mit Hilfe eines Futters (4) erfolgt, das für jedes entfernbare Teil einen rückziehbaren Dorn (40, 41, 42) besitzt.

6.  Wickelverfahren nach Anspruch 3, dadurch gekennzeichnet, daß dem Aufwickeln einer Lichtleitfaser das Anordnen mindestens eines entfernbaren Flansches (50, 51) an der inneren Seite eines der Flansche (2, 3) des Spulenkörpers sowie seine Befestigung an dem betreffenden Flansch vorausgeht und dem Aufwickkeln der Lichtleitfaser das Entfernen des entfernbaren Flansches (50, 51) folgt.

FIG.2

FIG.1

# FIG.3

# FIG.4

Coupe AA'